# FASCICULE DE BREVET EUROPEEN

(11) **EP 1 341 662 B1**
(45) Date de publication et mention de la délivrance du brevet: **29.09.2004**
(21) Numéro de dépôt: 00975723.8
(22) Date de dépôt: 16.11.2000
(51) Int. Cl.: B29C 53/12

(54) **METHODE ET APPAREIL POUR GENERER DES SPIRALES EN PLASTIQUE**
VERFAHREN UND VORRICHTUNG ZUM HERSTELLEN VON KUNSTSTOFFSPIRALEN
METHOD AND DEVICE FOR GENERATING PLASTIC HELICAL ARTICLES

(43) Date de publication de la demande: 10.09.2003
(73) Titulaire: 2751-3654 Québec Inc., Québec, Québec G2C 1B2 (CA)
(72) Inventeur: PRIMEAU, André, Québec, Québec G0A 2C0 (CA); CORRIVEAU, Régent, Québec, Québec G6Z 1P4 (CA); BEDARD, Jean, T., Québec, Québec G1G 2H1 (CA); BRISSON, Jean-Claude, Boucherville, (Québec) J4B 1H6 (CA)
(74) Mandataire: Nithardt, Roland
(86) Numéro de dépôt international: PCT/CA2000/001353
(87) Numéro de publication internationale: WO 2002/040249

(56) Documents cités:
- FR-A- 1 537 466
- US-A- 4 204 818
- US-A- 4 285 899

## Description

### DOMAINE DE L'INVENTION

Cette invention a trait à des spirales en plastique, et en particulier à une méthode pour générer des spirales en plastique et à un appareil pour la mise en oeuvre de cette méthode.

### ÉTAT DE LA TECHNIQUE

Les spirales en plastique sont bien connues par leurs nombreux emplois, par exemple pour former reliure spirale des pages d'un livre ou d'un carnet. Les spirales utilisées de cette façon sont des filaments de plastique semi-rigides produisant une hélice cylindroïde à diamètre et pas constants. Un avantage particulier de cette forme d'élément d'attache en spirale de plastique est qu'il n'est pas dispendieux à produire, tout en demeurant résistant, offrant une bonne apparence esthétique et produisant un organe d'attache efficace et facile à utiliser pour les pages d'un livre ainsi reliées.

Une méthode connue de produire des spirales de plastique comprend l'emploi d'une branche de convoyeur pour le filament thermoplastique dans laquelle le filament est chauffé de façon à atteindre un état malléable semi-visqueux, puis alimenté dans un canal hélicoïdal dans lequel sa configuration hélicoïdale sélectionnée est atteinte en refroidissant le canal de telle façon que le filament thermoplastique se solidifiera et reprendra son caractère semi-rigide selon la configuration d'une spirale formée conformément au canal hélicoïdal de pas et diamètre désirés constants. Le refroidissement est atteint par tout moyen approprié de refroidissement du canal conducteur thermique, de sorte que le filament plastique sera refroidi par transfert de chaleur au travers son épaisseur.

Le problème principal affligeant ce type de méthode conventionnelle pour générer des spirales de plastiques, est que la spirale qui s'échappe ainsi du canal hélicoïdal est impartie d'un mouvement rotatif autour de son axe longitudinal, en sus du mouvement désiré en translation de sortie d'échappement le long de ce même axe longitudinal. Donc, le filament de spirale de plastique ne peut pas être enroulé autour d'une bobine dans des buts de transport et de stockage, puisque le filament en spirale tourne autour de lui-même ce qui aurait comme conséquence une torsion non souhaitable de la spirale de plastique sur la bobine. La façon habituelle de contourner ce problème est de sectionner le filament en spirale à intervalles réguliers - et relativement courts -, par exemple à tous les trois pieds. Ceci empêche en effet la torsion des spirales sur elles-mêmes, mais empêche les spirales d'être stockées, transportées et vendues en tant que spirales allongées unitaires. Non seulement c'est moins intéressant de vendre des spirales de courte longueur, mais en plus de couper la spirale de plastique est susceptible de résulter en d'importantes pertes en matériau plastique de spirale. En effet, si la longueur à laquelle la spirale est coupée (e. g. quatre-vingt-dix centimètres (cm)) n'est pas un multiple des longueurs effectivement employées pour les spirales (e. g. pour relier des livres ayant une longueur de soixante cm), alors le matériel de spirale additionnel (e. g. trente cm de long pour chaque spirale de quatre-vingt-dix cm) devra être mis de côté et jeté.

### BUTS DE L'INVENTION

Le but principal de cette invention est de fournir une méthode et un appareil pour générer des spirales de plastique permettant d'améliorer les méthodes et appareils déjà existants, et plus particulièrement qui permet la sortie de l'appareil générateur de spirales d'alimenter en continu une spirale de plastique non rotative.

### SOMMAIRE DE L'INVENTION

Cette invention a trait à un appareil pour générer une spirale pour former une spirale allongée en continu à partir d'un filament flexible droit continu, ledit appareil comprenant:
- un canal hélicoïdal axialement rotatif, installé autour d'un axe longitudinal stationnaire et définissant une extrémité amont ayant une ouverture d'entrée permettant au filament d'y être alimenté et une extrémité aval ayant une ouverture de sortie permettant à la spirale de s'en échapper;
- une buse d'injection pour alimenter le filament dans ladite ouverture d'entrée du canal, et pouvant tourner de façon intégrale avec ledit canal;
- un dispositif à force, pour faire tourner ledit canal hélicoïdal et ladite buse d'injection selon un mouvement rotatif commun;
caractérisé en ce que le filament alimenté dans ledit canal glissera sur son long selon une direction de déplacement hélicoïdale le long de laquelle il se constituera en spirale, ledit canal hélicoïdal tournant dans une direction opposée à la direction de déplacement du filament et à une vitesse de rotation permettant à la spirale qui s'échappe de ladite ouverture de sortie du canal d'être impartie d'un déplacement de sortie en translation, tout en révélant un déplacement nul en rotation autour dudit axe longitudinal.

L'invention se rapporte en particulier à un appareil générateur de spirale en plastique pour former une spirale de plastique allongée en continu à partir d'un filament thermoplastique flexible continu, ledit appareil comprenant:
- un canal hélicoïdal installé autour d'un axe longitudinal stationnaire et définissant une extrémité amont et une extrémité aval, ledit canal hélicoïdal étant constitué d'un manchon stationnaire et d'un mandrin axialement rotatif se prolongeant axialement dans ledit manchon de façon radialement adjacente, ledit mandrin ayant un sillon filet se prolongeant axialement situé dans ledit manchon, de sorte que le filament de plastique puisse coulisser dans ledit canal hélicoïdal qui définit une ouverture de sortie à son extrémité aval pour permettre au filament de s'en échapper;
- une buse d'injection ayant une ouverture d'entrée pour permettre au filament d'y être alimenté, ladite buse d'injection étant reliée de façon intégrale audit mandrin rotatif, de façon à être rotative avec celui-ci dans un mouvement de rotation commun, et permettant au filament d'être alimenté au niveau de ladite extrémité amont du canal hélicoïdal;
- un dispositif de chauffage, pour chauffer le filament thermoplastique avant qu'il ne pénètre dans ledit canal hélicoïdal de sorte que le filament atteigne un état semi-visqueux;
- un dispositif de refroidissement, pour refroidir le filament alors qu'il est dans ledit canal hélicoïdal, de sorte que le filament thermoplastique s'y solidifiera et sera formé en une spirale en raison de la forme hélicoïdale dudit canal;
- un dispositif à force, pour faire tourner ledit mandrin et ladite buse; de sorte que le filament alimenté dans ledit canal hélicoïdal y glissera, entre ledit mandrin et ledit manchon, selon une direction de déplacement et s'en échappera au niveau de ladite ouverture de sortie du canal, ledit mandrin tournant dans une direction opposée à la direction de déplacement du filament et à une vitesse de rotation permettant à la spirale qui s'échappe de ladite ouverture de sortie de canal de se déplacer avec un déplacement de sortie en translation, tout en révélant un déplacement nul en rotation autour de son axe longitudinal.

Cette invention a trait également à une méthode pour former une spirale de plastique en continu à partir d'un filament thermoplastique droit, comprenant les étapes suivantes:
a) chauffer le filament thermoplastique jusqu'à ce qu'il atteigne un état malléable semi-visqueux;
b) injecter le filament chauffé avec une buse d'injection dans un canal hélicoïdal formé par un mandrin fileté rotatif se prolongeant axialement dans un manchon stationnaire et en étant radialement adjacent, avec le filament coulissant le long du canal dans une direction de déplacement hélicoïdale vers l'ouverture de sortie;
c) refroidir ledit canal pendant l'injection du filament dans celui-là, de sorte que ledit filament sera effectivement formé en une spirale de plastique d'une configuration correspondant audit canal hélicoïdal;
d) faire tourner en un mouvement rotatif commun le mandrin et la buse d'injection pendant l'injection dans une direction à l'opposé de la direction de déplacement et à une vitesse permettant à la spirale de plastique continue de s'échapper à l'ouverture de sortie avec un déplacement axial en translation, tout en révélant un déplacement nul en rotation autour de son axe longitudinal.

Préférablement, la méthode comprend en plus l'étape suivante après l'étape d):
e) faire tourner autour d'une bobine la spirale de plastique continue libérée en spires successives.

L'invention a trait également à une spirale de plastique continue en bobine obtenue à partir de la méthode décrite précédemment, comprenant une bobine et une spirale de plastique continue allongée définissant un axe longitudinal, ladite spirale de plastique étant enroulée d'au moins plusieurs tours autour de ladite bobine et étant sensiblement libre de toutes forces en torsion par rapport à son axe longitudinal.

### DESCRIPTION DES DESSINS

Dans les dessins ci-joints:
la figure 1 est une élévation schématique du convoyeur générateur de spirale en plastique et de l'appareil générateur de spirale selon l'invention;
la figure 2 est une élévation agrandie, partiellement en coupe, de l'appareil générateur de spirale selon l'invention; et
la figure 3 est une vue en perspective de la bobine de stockage de spirale en plastique, avec une spirale de plastique et sa bande de papier en regard qui pénètrent dans la bobine.

### DESCRIPTION DÉTAILLÉE DES RÉALISATIONS

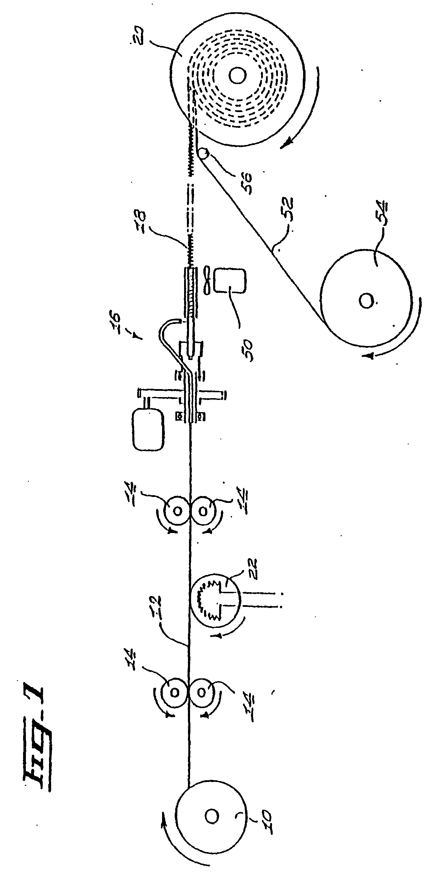

La figure 1 montre de façon schématique une bobine d'alimentation en filament, 10, fournissant un filament thermoplastique flexible droit et continu, 12. Le filament 12 est dirigé au moyen d'un certain nombre de rouleaux d'alimentation 14, e. g. quatre rouleaux d'alimentation 14, vers l'intérieur d'un appareil générateur de spirale de plastique, 16, selon l'invention. L'appareil 16 produit une spirale de plastique continue allongée, 18, à partir du filament 12, et comprend préférablement une bobine de stockage 20 pour enrouler et stocker la spirale 16 de la façon qui sera décrite plus bas. Un dispositif de chauffage conventionnel 22 est prévu près du filament 12 et est situé en amont du reste de l'appareil 16, par exemple entre deux paires successives de rouleaux d'alimentation 14, de sorte que le filament 12 puisse atteindre un état semi-visqueux qui soit caractérisé par le fait qu'il devienne mou et malléable tout en maintenant une intégrité structurelle intrinsèque suffisante pour être entraîné par les rouleaux d'alimentation 14 au travers l'appareil 16. Des moyens de force (non représentés) entraînent les rouleaux 14 dans leurs mouvements rotatifs à la vitesse sélectionnée.

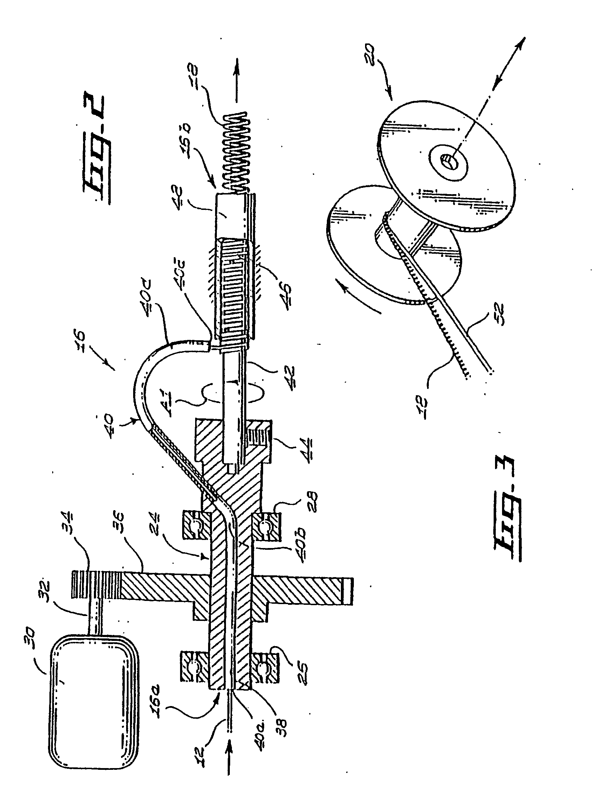

La figure 2 montre que l'appareil générateur de spirale de plastique, 16, définit une extrémité amont 16a et une extrémité aval 16b, et comporte un tambour rotatif 24 installé au moyen de roulements à billes annulaires 26, 28, de façon à être rotatifs autour d'un axe longitudinal stationnaire. Le tambour 24 peut tourner à une vitesse sélectionnée au moyen d'un moteur 30 dont l'arbre d'entraînement 32 est relié axialement à un pignon 34 engageant tangentiellement et fonctionnellement une roue dentée complémentaire 36 installée coaxialement et intégralement sur le tambour 24.

Le tambour 24 comprend un alésage axial 38 qui se prolonge de son extrémité amont 16a le long d'une partie importante de sa longueur, i.e. environ deux tiers de sa longueur, et enferme une conduite creuse de col de cygne, 40. Le col de cygne 40 a une extrémité amont 40a au niveau de l'extrémité amont 16a de l'appareil, un corps intermédiaire 40b passant axialement à l'intérieur du tambour 24, le corps 40b étant coudé et passant transversalement au travers le tambour 24 et vers l'extérieur jusqu'à une extrémité aval courbée 40c comportant une buse d'injection d'extrémité 40d.

Un mandrin 42 fait sailli axialement de l'extrémité aval du tambour 24 et y est relié de façon solidaire au moyen d'une vis de serrage 44. Le mandrin 42 comprend une portion filetée axiale, 46, sur son corps principal, étant légèrement espacée par rapport au tambour 24 et s'allongeant jusqu'à son extrémité libre extérieure qui est masquée dans la figure 2 par un manchon stationnaire 48 entourant le sillon de filet 46 de façon radialement adjacente.

On peut donc voir que le tambour 24, le col de cygne 40 et le mandrin 42, y compris sa portion filetée 46, sont tous reliés de façon solidaire les uns aux autres de façon à être déplaçables selon un mouvement rotatif commun.

Ainsi employé, le filament thermoplastique chauffé 12 est alimenté dans l'extrémité amont du col de cygne, 40a, et se déplace dans le creux de la conduite 40 du col de cygne vers l'extérieur par la buse d'injection 40d, laquelle vient vis-à-vis l'extrémité amont du sillon filet 46 du mandrin de sorte que le filament visqueux 12 puisse s'insérer dans le sillon filet hélicoïdal 46 de façon à y en épouser la forme. Le filament 12 est entraîné de façon continue pendant le fonctionnement de l'appareil 16 par les rouleaux d'alimentation 14, et en raison de l'intégrité structurelle suffisante du filament 12, celui-ci continue d'être entraîné par les rouleaux 14 à partir de l'extrémité amont 16a jusqu'à l'extrémité aval 16b de l'appareil 16.

Le filament 12 glisse le long du passage hélicoïdal du sillon de filet 46 entre le mandrin 42 et le manchon radialement adjacent 48 vers l'extérieur au travers l'extrémité aval de l'ouverture de sortie 16b. Un dispositif de refroidissement 50 (figure 1) refroidit continuellement le manchon 48 lequel, par effet d'échangeur de chaleur, va refroidir le filament 12 de façon à ce qu'il s'y solidifie et qu'il prenne la forme d'un filet hélicoïdal 46 pour devenir une spirale 18 à l'ouverture de sortie 16b. Le manchon 48 est donc fait d'un matériau convenable conducteur de chaleur, tel qu'un alliage métallique acceptable.

L'on comprend qu'en raison de l'engagement par glissement du filament 12 à l'intérieur du col de cygne 40 et le long du sillon 46 à l'intérieur du manchon 48, les surfaces ainsi engagées du col de cygne 40, du sillon de filet 46 et du manchon 48 doivent avoir un faible coefficient de friction pour y permettre un engagement à faible friction du filament 12.

Lorsque le filament 12 est alimenté au travers l'appareil 16, le tambour 24 est entraîné en un mouvement rotatif par le moteur 30. En raison de l'attachement solidaire du col de cygne 40 et du mandrin 42 au tambour 24, l'ensemble de ces trois derniers éléments vont tourner dans un mouvement rotatif commun, demeurant ainsi stationnaires les uns par rapport aux autres. Avec l'engagement coulissant du filament 12 le long du sillon de filet 46, il devient possible d'ajuster de façon sélective la direction et la vitesse du moteur 30 de sorte que le tambour 24 tourne dans la direction (flèche A1 de la figure 2) à l'opposé du mouvement de rotation créé par la direction de déplacement hélicoïdale du filament 12; et à une vitesse égale à la vitesse de rotation du filament 12 dans le sillon de filet 46, de sorte que la spirale 18 puisse s'échapper à l'ouverture de sortie 16b avec un déplacement de sortie en translation, tout en observant un déplacement nul en rotation. En conséquence, la spirale 18 serait libre de toutes forces intrinsèques de torsion et ne serait pas susceptible d'être tordue autour de son axe longitudinal lorsqu'elle s'échappe de l'appareil 16. Ce résultat avantageux est atteint en particulier grâce au fait que la buse d'injection 40d du col de cygne 40 tourne à la même vitesse et dans la même direction que le sillon de filet 46 et donc ils demeurent stationnaires les uns par rapport aux autres. Par conséquent, à tout point donné du filament 12 le long du sillon de filet 46 correspond une vitesse absolue de translation égale à la vitesse d'échappement de sortie de la spirale 18, alors qu'il a une vitesse absolue de rotation qui est égale à zéro. Ce même point donné du filament 12 a une vitesse de translation par rapport au mandrin 42 qui est égale à sa vitesse de translation absolue, alors que sa vitesse de rotation par rapport au mandrin 42 possède une valeur positive qui dépend de la vitesse d'alimentation conférée au filament 12 par les rouleaux 14 et sur le pas du sillon de filet 46. Cette dernière vitesse relative de rotation n'est pas dépendante de la vitesse en rotation du tambour 24, puisque le tambour 24 et le mandrin 42 tournent dans un mouvement commun.

Dans le cas où peu ou pas de friction se produit entre le filament 12 et le sillon de filet rotatif 46, le filament 12 n'est pas entraîné par le sillon de filet 46, le seul but de celui-ci étant de procurer la forme hélicoïdale convenable souhaitée au filament 12. Cependant, on a découvert en pratique que le filament 12 sera effectivement légèrement entraîné dans un mouvement de rotation en raison du .coefficient de friction inévitable présent entre le filament et le sillon de filet 46, et donc qu'un léger mouvement rotatif indésirable pourrait résulter à l'extrémité de sortie 16b du dispositif 16. Pour contourner ce problème, la surface intérieure du manchon 48 est réalisée de telle sorte à avoir un coefficient de friction légèrement plus grand que celui du sillon de filet 46, de façon à ce que le filament 12 puisse effectivement être entraîné par les rouleaux 14 pour coulisser au travers le sillon de filet 46 dans le manchon 48, tout en étant empêché par ce léger engagement par friction avec le manchon 48 d'être entraîné dans un mouvement de rotation non souhaité par la rotation du sillon de filet 46. Ainsi, la spirale 18 n'aurait effectivement aucun mouvement de rotation à la sortie 16b du dispositif 16.

Les figures 1 et 3 montrent que la spirale 18, lorsqu'elle s'échappe du mandrin 42, est enroulée autour d'une bobine de stockage 20 en des tours consécutifs. On peut obtenir un tel enroulement de spirale 18 en raison du fait que la spirale 18 est libre de toutes forces en torsion, et peut donc être enroulée sans qu'elle ne se torde sur elle-même autour de son axe longitudinal. Ceci constitue un avantage important de cette invention par rapport aux appareils de l'état de la technique, puisque la bobine retenant une spirale continue enroulée 18 peut être vendue telle quelle, et alors la spirale 18 peut être sectionnée à tout intervalle désiré régulier ou irrégulier de toute longueur désirée, avec peu ou pas de perte de spirale 18.

Préférablement, une bande de papier 52 est enroulée autour de la bobine de stockage 20 vis-à-vis la spirale 18 et de façon adjacente, de sorte que la bande de papier 52 repose sous chaque tour de spirale 18 afin d'empêcher que les spires des tours chevauchant de la spirale 18 ne se mêlent les uns avec les autres de sorte que les tours de la spirale 18 deviendraient bloqués les uns avec les autres sur la bobine 20. La bande 52 provient d'une bobine d'alimentation en papier, 54, et est redirigée sensiblement parallèle à la spirale 18 près de la bobine de stockage 20 au moyen d'un rouleau libre 56.

La bobine de stockage 20, lorsqu'elle atteint sa capacité maximale de tours de spirales 18, représente alors un nouveau produit utile de spirale de plastique continue embobinée, obtenu par le procédé de formation de spirales de cette invention, lequel ne pourrait pas être obtenu par les appareils et procédés de l'état de la technique. La spirale de plastique continu embobinée comprend une bobine et une spirale allongée continue en plastique définissant un axe longitudinal, avec la spirale de plastique étant enroulée d'au moins plusieurs tours autour de la bobine et étant sensiblement libre de toutes forces torsionnelles par rapport à son axe longitudinal.

Toutes modifications qui ne s'écartent pas de la porté de cette invention, sont considérées comme en en faisant partie.

Par exemple, l'on considérera que la portée de cette invention s'étendra à un appareil adapté à des filaments de spirale en matériaux autres que les thermoplastiques, e. g. les filaments métalliques souples, de sorte que les opérations de chauffage et de refroidissement ne seraient pas nécessairement requises si la déformation du plastique du filament était obtenue de façon satisfaisante dans le sillon de filet 46 du mandrin, dépendamment de la nature du matériau du filament.

Également, le col de cygne 40 pourrait être remplacé par tout autre buse d'injection convenable, en autant qu'il tourne selon un mouvement de rotation commun avec le mandrin 42 et qu'il entraîne le filament dans le sillon de filet 46 à son extrémité amont pour y générer la spirale.

L'on envisage également que l'agencement constitué par le manchon 48 et le mandrin 42 pourrait être remplacé par un autre type de canal hélicoïdal convenable, e. g. une conduite en forme d'hélice, en autant qu'il tourne aussi selon un mouvement rotatif commun avec la buse d'injection. Par exemple, un tel canal hélicoïdal pourrait simplement être formé en fournissant un agencement solidaire de mandrin et de manchon qui tournerait dans un mouvement de rotation commun. Cependant, la réalisation qui est privilégiée est celle où le mandrin 42 et le manchon 48 seraient distincts, en raison du fait que le mandrin 42 peut aisément être remplacé par un autre de pas différent, et le mandrin 42 et le manchon 48 pourraient être remplacés par d'autres à diamètre différent. En plus, le mandrin amovible 42 rend plus facile les opérations d'entretien et de nettoyage du mandrin et dans le manchon 48. Finalement, et de façon importante, le léger engagement par friction du manchon 48 par le filament 12 est important pour empêcher un léger déplacement en rotation de la spirale 18 à l'extrémité de sortie 16b du dispositif. Un canal hélicoïdal pourrait être utilisé, en autant que le matériau utilisé pour cela ait un rapport convenable sans friction avec le matériau du filament 12.

De plus, la bobine 20 pourrait être remplacée par un autre dispositif de stockage convenable. Par exemple, le dispositif de stockage pourrait être un contenant de stockage de type baril, ayant une tige centrale se tenant droit axialement sur une paroi d'extrémité solidaire de la paroi cylindrique. Le filament pourrait alors être enroulé dans le contenant de type baril, simplement en le laissant tomber sur sa paroi d'extrémité autour de la tige. Un couvercle pourrait être prévu pour fermer le contenant lorsque celui-ci est rempli de spires de spirale.

## Revendications

1. La combinaison d'un filament thermoplastique flexible (12) et d'un appareil (16) pour générer une spirale pour former une spirale allongée en continu (18) à partir d'une source droite continue (12) dudit filament flexible, ledit appareil (16) comprenant:
- un canal hélicoïdal axialement rotatif, installé autour d'un axe longitudinal stationnaire et définissant une extrémité amont (16a) ayant une ouverture d'entrée permettant au filament d'y être alimenté et une extrémité aval (16b) ayant une ouverture de sortie permettant à la spirale de s'en échapper;
- une buse d'injection (40d) pour alimenter le filament (12) dans ladite ouverture d'entrée du canal, et pouvant tourner de façon intégrale avec ledit canal;
- un dispositif à force, pour faire tourner ledit canal hélicoïdal et ladite buse d'injection (40d) selon un mouvement rotatif commun;
**caractérisé en ce que** le filament (12) alimenté dans ledit canal glissera sur son long selon une direction de déplacement hélicoïdale le long de laquelle il se constituera en spirale, et **caractérisé en ce que** l'angle de courbure de l'hélice dudit filament (12) demeure constant sur toute la longueur dudit canal hélicoïdal;
ledit canal hélicoïdal tournant dans une direction opposée à la direction de déplacement du filament et à une vitesse de rotation permettant à la spirale qui s'échappe de ladite ouverture de sortie du canal d'être impartie d'un déplacement de sortie en translation, tout en révélant un déplacement nul en rotation autour dudit axe longitudinal.

2. La combinaison d'un filament thermoplastique flexible (12) et d'un appareil (16) générateur de spirale en plastique pour former une spirale (18) de plastique allongée en continu à partir d'une source continue droite dudit filament thermoplastique flexible (12), ledit appareil comprenant:
- un canal hélicoïdal installé autour d'un axe longitudinal stationnaire et définissant une extrémité amont (16a) et une extrémité aval (16b), ledit canal hélicoïdal étant constitué d'un manchon (48) stationnaire et d'un mandrin (42) axialement rotatif se prolongeant axialement dans ledit manchon (48) de façon radialement adjacente, ledit mandrin (42) ayant un sillon filet (46) se prolongeant axialement situé dans ledit manchon (48), de sorte que le filament de plastique (12) puisse coulisser dans ledit canal hélicoïdal qui définit une ouverture de sortie à ladite extrémité aval pour permettre au filament de s'en échapper;
- une buse d'injection (40d) ayant une ouverture d'entrée pour permettre au filament d'y être alimenté, ladite buse d'injection (40d) étant reliée de façon intégrale audit mandrin rotatif (42), de façon à être rotative avec celui-ci dans un mouvement de rotation commun, et permettant au filament (12) d'être alimenté au niveau de ladite extrémité amont du canal hélicoïdal;
- un dispositif de chauffage (22), pour chauffer le filament thermoplastique (12) avant qu'il ne pénètre dans ledit canal hélicoïdal de sorte que le filament atteigne un état semi-visqueux;
- un dispositif de refroidissement (50), pour refroidir le filament (18) alors qu'il est dans ledit canal hélicoïdal, de sorte que le filament thermoplastique (18) s'y solidifiera et sera formé en une spirale en raison de la forme hélicoïdale dudit canal;
- un dispositif à force, pour faire tourner ledit mandrin (42) et ladite buse (40d);
**caractérisé en ce que** le filament (18) alimenté dans ledit canal hélicoïdal y glissera, entre ledit mandrin (42) et ledit manchon (48), selon une direction de déplacement et s'en échappera au niveau de ladite ouverture de sortie du canal,
et **caractérisé en ce que** l'angle de courbure de l'hélice dudit filament (18) demeure constant sur toute la longueur dudit canal hélicoïdal le long d'aussi bien le manchon stationnaire (48) que dudit mandrin rotatif (42),
ledit mandrin tournant dans une direction opposée à la direction de déplacement du filament et à une vitesse de rotation permettant à la spirale qui s'échappe de ladite ouverture de sortie de canal de se déplacer
avec un déplacement de sortie en translation, tout en révélant un déplacement nul en rotation autour de son axe longitudinal.

3. La combinaison d'un appareil et d'un filament thermoplastique selon la revendication 2,
**caractérisé en ce que** le coefficient de friction entre ledit manchon (48) et ledit filament de plastique (18) est plus grand que celui entre ledit mandrin (42) et le filament (18).

4. La combinaison d'un appareil et d'un filament thermoplastique selon la revendication 2,
comprenant au surplus un tambour (24) rotatif relié audit dispositif à force et retenant de façon intégrale ladite buse (40d) et ledit mandrin (42), avec ledit mandrin (42) faisant saillie axialement intégralement dudit tambour (24) de façon à être entraîné dans un mouvement rotatif commun avec celui-ci.

5. La combinaison d'un appareil et d'un filament thermoplastique selon la revendication 4,
**caractérisé en ce que** ladite buse (40d) est un col de cygne (40) ayant une extrémité amont (40a) au niveau de ladite ouverture d'entrée (16a), un corps intermédiaire (40b) se prolongeant au travers ledit tambour et une extrémité aval (40d) courbée venant vis-à-vis ledit sillon de mandrin au niveau de ladite extrémité amont de canal.

6. La combinaison d'un appareil et d'un filament thermoplastique selon la revendication 2,
comprenant au surplus une bobine de stockage (20) pour stocker la spirale de plastique (18) qui échappe de ladite ouverture de sortie, ladite bobine (20) tournant à une vitesse permettant à la spirale de plastique continue s'en échappant d'y être enroulée en tours consécutifs.

7. La combinaison d'un appareil et d'un filament thermoplastique selon la revendication 6,
comprenant au surplus une bande de papier continu (52) pour engager de façon radiale la spirale de plastique (18) de façon adjacente et donc étant enroulée autour de ladite bobine (20) simultanément avec la spirale de plastique.

8. Méthode pour former une spirale de plastique (18) en continu à partir d'un filament thermoplastique droit (12), comprenant les étapes suivantes:
a) chauffer le filament thermoplastique jusqu'à ce qu'il atteigne un état malléable semi-visqueux;
b) injecter le filament chauffé avec une buse d'injection (40d) dans un canal hélicoïdal formé par un mandrin fileté rotatif (42) se prolongeant axialement dans un manchon stationnaire (48) et en étant radialement adjacent, avec le filament coulissant le long du canal dans une direction de déplacement hélicoïdale vers l'ouverture de sortie;
c) refroidir ledit canal pendant l'injection du filament dans celui-là, de sorte que ledit filament sera effectivement formé en une spirale de plastique (18) d'une configuration correspondant audit canal hélicoïdal;
d) faire tourner en un mouvement rotatif commun le mandrin (42) et la buse d'injection (40d) pendant l'injection dans une direction à l'opposé de la direction de déplacement et à une vitesse permettant à la spirale de plastique continue (18) de s'échapper à l'ouverture de sortie avec un déplacement axial en translation, tout en révélant un déplacement nul en rotation autour de son axe longitudinal.

9. Une méthode telle que décrite à la revendication 8,
comprenant en plus l'étape suivante après l'étape d):
e) faire tourner autour d'une bobine (20) la spirale de plastique continue (18) libérée en spires successives.

10. Une méthode telle que décrite à la revendication 9,
comprenant au surplus, pendant l'étape e), l'étape suivante:
f) enroulant autour de la bobine (20) une bande de papier flexible et continue (52), vis-à-vis la spirale de plastique (18) de façon radialement adjacente à celle-ci.

11. Une spirale de plastique continue en bobine obtenue à partir de la méthode décrite à la revendication 9,
comprenant une bobine (20) et une spirale de plastique continue allongée (18) définissant un axe longitudinal, ladite spirale de plastique (18) étant enroulée d'au moins plusieurs tours autour de ladite bobine (20) et étant sensiblement libre de toutes forces en torsion par rapport à son axe longitudinal.

12. La spirale de plastique continue embobinée telle que définie à la revendication 11,
comprenant au surplus une bande de papier continue (52) enroulée autour de ladite bobine (20) de façon radialement adjacente avec ladite spirale de plastique continue (18).

## Patentansprüche

1. Kombination aus einer flexiblen thermoplastischen Faser (12) und einer Vorrichtung (16) zur Erzeugung einer Spirale zur Ausbildung einer länglichen Endlosspirale (18) aus einer geradlinigen Endlosquelle (12) der flexiblen Faser, wobei die Vorrichtung (16) Folgendes aufweist:
- Einen spiralförmigen, axial drehbaren Kanal, der um eine feststehende Längsachse herum angebracht ist, und der ein stromaufwärts liegendes äußerstes Ende (16a), welches eine Eintrittsöffnung aufweist, die den Eintritt der Faser in dieselbe zulässt, und ein stromabwärts liegendes äußerstes Ende (16b) festlegt, welches eine Austrittsöffnung aufweist, die den Austritt der Spirale aus derselben zulässt;
- eine Einspritzdüse (40d) zum Zuführen der Faser (12) in die Eintrittsöffnung des Kanals, die zur vollständigen Drehung mit dem Kanal in der Lage ist;
- eine Kraftausübungsvorrichtung, um den spiralförmigen Kanal und die Einspritzdüse (40d) mit einer gemeinsamen Drehbewegung zur Drehung zu veranlassen;
**dadurch gekennzeichnet, dass**
die dem Kanal zugeführte Faser (12) auf dessen Länge in einer spiralförmigen Verlagerungsrichtung gleitet, entlang welcher sie eine Spirale ausbildet, und dass der Krümmungswinkel der Schnecke der Faser (12) auf der gesamten Länge des spiralförmigen Kanals konstant bleibt;
sich der spiralförmige Kanal in einer der Verlagerungsrichtung der Faser entgegengesetzten Richtung und mit einer Drehgeschwindigkeit dreht, die es der aus der Austrittsöffnung des Kanals austretenden Spirale ermöglicht, eine Austritts-Translationsbewegung auszuführen, wobei sie in Bezug auf die Drehung eine Nullverlagerung um die genannte Längsachse erfährt.

2. Kombination aus einer flexiblen thermoplastischen Faser (12) und einer Vorrichtung (16) zur Erzeugung einer Spirale zur Ausbildung einer länglichen Kunststoff-Endlosspirale (18) aus einer geradlinigen Endlosquelle der flexiblen thermoplastischen Faser (12), wobei die Vorrichtung Folgendes aufweist:
- Einen spiralförmigen Kanal, der um eine feststehende Längsachse herum angebracht ist, und der ein stromaufwärts liegendes äußerstes Ende (16a) und ein stromabwärts liegendes äußerstes Ende (16b) festlegt, wobei der spiralförmige Kanal aus einer feststehenden Hülse (48) und einem axial drehbaren Dorn (42) besteht, der sich axial in die Hülse (48) radial angrenzend verlängert, wobei der Dorn (42) gewindeförmige Rillen (46) aufweist, die sich axial verlängern und in der Hülse (48) so angeordnet sind, dass die Kunststofffaser (12) in dem spiralförmigen Kanal gleiten kann, der eine Austrittsöffnung an dem stromabwärts liegenden äußersten Ende festlegt, um den Austritt der Faser aus derselben zuzulassen;
- eine Einspritzdüse (40d), die eine Eintrittsöffnung aufweist, um die Zufuhr der Faser in dieselbe zuzulassen, wobei die Einspritzdüse (40d) vollständig mit dem drehbaren Dorn (42) so verbunden ist, dass sie mit demselben in Form einer gemeinsamen Drehbewegung drehbar ist, und um die Zufuhr der Faser (12) auf der Höhe des stromaufwärts liegenden Endes des spiralförmigen Kanals zu ermöglichen;
- eine Heizvorrichtung (22) zum Erwärmen der thermoplastischen Faser (12) vor dem Eintritt in den spiralförmigen Kanal, so dass die Faser einen halbzähflüssigen Zustand erreicht;
- eine Abkühlungsvorrichtung (50) zum Abkühlen der Faser (18), während sie sich in dem spiralförmigen Kanal befindet, so dass sich die thermoplastische Faser (18) darin verfestigt und auf Grund der Spiralform des Kanals in eine Spirale geformt wird;
- eine Kraftausübungsvorrichtung, um den Dorn (42) und die Einspritzdüse (40d) zur Drehung zu veranlassen;
**dadurch gekennzeichnet, dass**
die dem Kanal zugeführte Faser (18) dort zwischen dem Dorn (42) und der Hülse (48) in einer Verlagerungsrichtung gleitet und auf der Höhe der Austrittsöffnung des Kanals aus derselben austritt,
und dass der Krümmungswinkel der Schnecke der Faser (18) auf der gesamten Länge des spiralförmigen Kanals sowie auch entlang der feststehenden Hülse (48) und des drehbaren Dornes (42) konstant bleibt,
wobei sich der Dorn in einer der Verlagerungsrichtung der Faser entgegengesetzten Richtung und mit einer Drehgeschwindigkeit dreht, die es der aus der Austrittsöffnung des Kanals austretenden Spirale ermöglicht, sich mit einer Austritts-Translationsbewegung zu verlagern, wobei sie in Bezug auf die Drehung eine Nullverlagerung um ihre Längsachse erfährt.

3. Kombination einer Vorrichtung und einer thermoplastischen Faser nach Anspruch 2,
**dadurch gekennzeichnet, dass**
der Reibungskoeffizient zwischen der Hülse (48) und der Kunststofffaser (18) größer als derjenige zwischen dem Dorn (42) und der Faser (18) ist.

4. Kombination einer Vorrichtung und einer thermoplastischen Faser nach Anspruch 2,
**dadurch gekennzeichnet, dass**
sie außerdem eine mit der Kraftausübungsvorrichtung verbundene Drehtrommel (24) aufweist, welche die Düse (40d) und den Dorn (42) vollständig zurückhält, wobei der Dorn (42) axial vollständig so über die Trommel (24) hervorsteht, dass er mit einer gemeinsamen Drehbewegung mit derselben angetrieben wird.

5. Kombination einer Vorrichtung und einer thermoplastischen Faser nach Anspruch 4,
**dadurch gekennzeichnet, dass**
die Düse (40d) ein Schwanenhals (40) ist, der ein stromaufwärts liegendes äußerstes Ende (40a) auf der Höhe der Eintrittsöffnung (16a), einen Zwischenkörper (40b), der sich über die Trommel verlängert, und ein stromabwärts liegendes, gekrümmtes äußerstes Ende (40d) aufweist, welches gegenüber der Dornrille auf der Höhe des stromaufwärts liegenden äußersten Endes des Kanals ankommt.

6. Kombination einer Vorrichtung und einer thermoplastischen Faser nach Anspruch 2,
**dadurch gekennzeichnet, dass**
sie außerdem eine Lagerungsspule (20) zur Lagerung der Kunststoffspirale (18) aufweist, die aus der Austrittsöffnung austritt, wobei sich die Spule mit einer Geschwindigkeit dreht, die es der daraus austretenden Kunststoff-Endlosspirale ermöglicht, sich in aufeinanderfolgenden Drehungen auf derselben aufzurollen.

7. Kombination einer Vorrichtung und einer thermoplastischen Faser nach Anspruch 6,
**dadurch gekennzeichnet, dass**
sie außerdem einen Endlospapierstreifen(52) aufweist, um die Kunststoffspirale (18) radial und daran angrenzend in Eingriff zu nehmen und somit gleichzeitig mit der Kunststoffspirale um die Spule (20) herum aufgerollt zu werden.

8. Verfahren zur Ausbildung einer Kunststoff-Endlosspirale (18) aus einer geradlinigen thermoelastischen Faser (12), welches die folgenden Schritte umfasst:
a) Erwärmen der thermoplastischen Faser, bis sie einen geschmeidigen, halbzähflüssigen Zustand erreicht;
b) Einspritzen der erwärmten Faser mit einer Einspritzdüse (40d) in einen spiralförmigen Kanal, der aus einem mit Gewinde versehenen drehbaren Dorn (42) ausgebildet ist, der sich axial in eine feststehende Hülse (48) verlängert, radial daran angrenzt, wobei die Faser entlang des Kanals in einer spiralförmigen Verlagerungsrichtung gleitet;
c) Abkühlen des Kanals während der Einspritzung der Faser in denselben, so dass die Faser in eine dem spiralförmigen Kanal entsprechende Ausgestaltung wirksam in eine Kunststoffspirale (18) geformt wird;
d) Veranlassen einer gemeinsamen Drehbewegung des Dornes (42) und der Einspritzdüse (40d) während der Einspritzung in einer der Verlagerungsrichtung der Faser entgegengesetzten Richtung und mit einer Geschwindigkeit, die es der aus der Austrittsöffnung des Kanals austretenden Kunststoff-Endlosspirale (18) ermöglicht, mit einer axialen Translationsverlagerung aus der Austrittsöffnung auszutreten, wobei sie in Bezug auf die Drehung eine Nullverlagerung um ihre Längsachse erfährt.

9. Verfahren nach Anspruch 8, welches außerdem den folgenden Schritt nach dem Schritt d) umfasst:
e) Veranlassen der Drehung der freigesetzten Kunststoff-Endlosspirale (18) in Form von aufeinanderfolgenden Windungen um eine Spule (20) herum.

10. Verfahren nach Anspruch 9, welches außerdem während dem Schritt e) den folgenden Schritt umfasst:
f) Veranlassen des Rollens eines flexiblen Endlospapierstreifens (52) gegenüber der Kunststoffspirale (18) und radial an dieselbe angrenzend um die Spule (20) herum.

11. Kunststoff-Endlosspirale auf einer Spule, die nach dem in Anspruch 9 beschriebenen Verfahren erhalten wurde,
wobei sie eine Spule (20) und eine längliche Kunststoff-Endlosspirale (18) aufweist, die eine Längsachse festlegt, wobei die Kunststoffspirale (18) mindestens mehrere Umdrehungen um die Spule (20) herum aufgewickelt wird, wobei sie im Verhältnis zu ihrer Längsachse praktisch von allen Torsionskräften frei ist.

12. Kunststoff-Endlosspirale, die auf einer Spule aufgerollt ist, wie sie in Anspruch 11 definiert ist,
wobei sie außerdem einen Endlospapierstreifen(52) aufweist, der an die Kunststoff-Endlosspirale (18) radial angrenzend um die Spule (20) herum aufgewickelt wird.

## Claims

1. The combination of a flexible thermoplastic wire (12) and of a coil forming apparatus (16) for forming an elongated continuous coil (18) out of a straight continuous section (12) of said flexible wire, said apparatus (16) comprising:
- an axially rotative helical channel mounted about a fixed longitudinal axis and defining an upstream end (16a) having an inlet opening allowing the wire to be fed therein and a downstream end (16b) having an outlet opening allowing the coil to be discharged therethrough;
- an injection nozzle (40d) for feeding the wire (12) into said channel inlet opening, and integrally rotatable with said channel;
- a power device, for rotating said helical channel and said injection nozzle (40d) in a common rotative movement;
wherein the wire (12) fed into said channel will slide therealong according to a helical travelling direction upon which it will be formed into a coil, and wherein the curvature angle of the helix of said wire remains constant on all the length of said helical channel; said helical channel rotating in a direction opposite the travelling direction of the wire and at a speed of rotation allowing the coil being discharged at said channel outlet opening to be imparted with an output translational displacement, while being exempt of any rotational displacement about said longitudinal axis.

2. The combination of a flexible thermoplastic wire (12) and a plastic coil forming apparatus (16) for forming an elongated continuous plastic coil (18) out of a straight continuous section of said flexible thermoplastic wire (12) , said apparatus comprising:
- a helical channel mounted about a fixed longitudinal axis and defining an upstream end (16a) and a downstream end (16b), said helical channel being formed by a stationary sleeve (48) and an axially rotative mandrel (42) axially extending in said sleeve (48) in a radially adjacent fashion, said mandrel (42) having an axially extending thread (46) located in said sleeve (48), whereby the plastic wire (12) can slide in said helical channel which defines an outlet opening at said downstream end for allowing the wire to be discharged therethrough;
- an injection nozzle (40d), having an inlet opening for allowing the wire to be fed therein, said injection nozzle (40d) being integrally connected to said rotative mandrel (42), thus being rotatable therewith in a common rotative movement, and allowing the wire (12) to be fed at said helical channel upstream end;
- a heating device (22) , for heating the thermoplastic wire (12) before it enters said helical channel so that the wire achieves a semi-viscous state;
- a cooling device (50), for cooling the wire (18) while it is in said helical channel, whereby the thermoplastic wire (18) will solidify therein and will be formed into a coil due to the helical shape of said channel;
- a power device, for rotating said mandrel (42) and said nozzle (40d);
wherein the wire (18) fed into said helical channel will slide therealong, between said mandrel (42) and said sleeve (48), according to a travelling direction and be discharged at said channel outlet opening, and wherein the curvature angle of the helix of said wire (18) remains constant all along the length of said helical channel along the fixed sleeve (48) as well as along the rotating mandrel (42); said mandrel rotating in a direction opposite the travelling direction of the wire and at a speed of rotation allowing the coil being discharged at said channel outlet opening to move with an output translational displacement, while being exempt of any rotational displacement about its longitudinal axis.

3. The combination of apparatus and of thermoplastic wire as defined in claim 2, wherein the friction coefficient between said sleeve (48) and said plastic wire (18) is greater than the one between said mandrel (42) and the wire (18).

4. The combination of apparatus and of thermoplastic wire as defined in claim 2, further comprising a rotatable drum (24) linked to said power device and integrally holding said nozzle (40d) and said mandrel (42) , with said mandrel (42) axially integrally projecting from said drum (24) so as to be driven into a common rotative movement therewith.

5. The combination of apparatus and thermoplastic wire as defined in claim 4, wherein said nozzle (40d) is a swan neck (40) having an upstream end (40a) at said inlet opening (16a), an intermediate body (40b) extending through said drum and a bent dowstream end (40d) registering with said mandrel thread at said channel upstream end.

6. The combination of apparatus and thermoplastic wire as defined in claim 2, further comprising a storing spool (20) for storing the plastic coil (18) being discharged at said outlet opening, said spool (20) rotating at a speed allowing the discharged continuous plastic coil to be wound therearound in consecutive turns.

7. The combination of apparatus and thermoplastic wire as defined in claim 6, further comprising a continuous paper band (52) for radially engaging in adjacent fashion the plastic coil (18) and thus being wound around said spool (20) simultaneously with the plastic coil.

8. A method for forming a continuous plastic coil (18) from a straight thermoplastic wire, comprising the steps of:
a) heating the thermoplastic wire until it achieves a semi-viscous malleable state;
b) injecting the heated wire with an injection nozzle (40d) into a helical channel formed by a rotating threaded mandrel (42) axially extending into a stationary sleeve (48) and being radially adjacent therewith, with the wire sliding along the channel in a helical travelling direction to an outlet opening;
c) cooling said channel during the injection of the wire therein, wherein said wire will effectively be formed into a plastic coil (18) of a shape corresponding to said helical channel;
d) rotating in a common rotative movement the mandrel (42) and the injection nozzle (40d) during the injection in a direction opposite the travelling direction and at a speed allowing the continuous plastic coil to be discharged at the outlet opening with an axial translational displacement, while being exempt of any rotational displacement about its longitudinal axis.

9. A method as described in claim 8, further comprising the following step after step d):
e) winding around a spool (20) the discharged continuous plastic coil (18) in successive turns.

10. A method as described in claim 9, further including, during step e), the following step:
f) winding around the spool (20) a flat, continuous flexible paper band (52) in radial adjacent register with the plastic coil (18).

11. A spooled continuous plastic coil obtained from the method described in claim 9, comprising a spool (20) and an elongated continuous plastic coil (18) defining a longitudinal axis, said plastic coil (18) being wound at least several turns around said spool (20) and being substantially free of any torsional forces relative to its longitudinal axis.

12. A spooled continuous plastic coil as defined in claim 11, further comprising a continuous paper band (52) wound about said spool (20) in adjacent radial register with said continuous plastic coil (18) .
